**Europäisches Patentamt**

**European Patent Office**

**Office européen des brevets**

(11) Numéro de publication : **0 305 274 B1**

(12) **FASCICULE DE BREVET EUROPEEN**

(45) Date de publication du fascicule du brevet :
20.05.92 Bulletin 92/21

(51) Int. Cl.⁵ : **H04N 13/00, G02B 27/22**

(21) Numéro de dépôt : **88402112.2**

(22) Date de dépôt : **16.08.88**

(54) **Procédé et installation pour la réalisation d'images en relief.**

(30) Priorité : **20.08.87 FR 8711764**

(43) Date de publication de la demande :
**01.03.89 Bulletin 89/09**

(45) Mention de la délivrance du brevet :
**20.05.92 Bulletin 92/21**

(84) Etats contractants désignés :
**AT BE CH DE ES GB GR IT LI LU NL SE**

(56) Documents cités :
**EP-A- 0 084 998**
**US-A- 3 852 524**
**US-A- 3 932 699**

(73) Titulaire : **SOCIETE DE DOCUMENTATION
D'EDITION ET DE REDACTION SODER
112, rue de Richelieu
Paris 2 (FR)**
Titulaire : **Allio, Pierre Yves Joseph
61, rue de la Mare
Paris 20 (FR)**

(72) Inventeur : **Allio, Pierre Yves Joseph
61 rue de la Mare
Paris (FR)**

(74) Mandataire : **Cabinet Pierre HERRBURGER
115, Boulevard Haussmann
F-75008 Paris (FR)**

**Description**

La présente invention concerne un procédé et une installation pour la réalisation d'images en relief, images de type autostéréoscopiques, selon le principe d'une prise de vue ou d'une vision à l'aide d'une lentille principale et d'une surface optique lenticulaire comportant une série de lentilles élémentaires, la prise de vue du sujet étant faite suivant au moins deux points de vue différents correspondant aux deux yeux d'un observateur, la série de lentilles donnant pour chaque point de vue du sujet, une image composée de points images formés respectivement par la lentille principale et chaque lentille élémentaire, l'image étant restituée à travers un système lenticulaire optiquement identique à celui de la prise de vue.

La présente invention concerne notamment la réalisation d'images en relief de type autostéréoscopique, soit sous forme d'images fixes, de films ou encore d'images vidéo.

Les techniques de la vision en relief ont fait l'objet de nombreuses études, toutes issues des réflexions du Physicien LIPPMANN (1845-1921).

L'art antérieur, issu de ces développements, a en particulier fait l'objet des brevets suivants : FR-A-1 394 818, FR-A-1 482 247, DE-A-1 936 070, DE-A-2 016 547, DE-A-2 032 977, DE-A-2 055 935, DE-A-2 062 485, DE-A-2 140 944, DE-A-2 302 151, FR-A-74 43 904, US-A-3 821 466, FR-A-77 23 326.

Les questions de télévision en relief ont fait l'objet de différentes études et, notamment, dans le brevet US-A-3 932 699.

Ce brevet US-A-3 932 699 concerne un système de télévision utilisant une caméra de prise de vue 11 en avant d'une lentille 14 de grandes dimensions suivie d'une surface lenticulaire 27. La reproduction de l'image se fait par un tube cathodique 41, 42, dont la face avant 43 est une surface lenticulaire. Ce document n'évoque en aucun endroit les problèmes de l'orthostéréoscopie.

Il convient également de citer le brevet US-A-4 487 490 qui concerne un appareil photographique de prise de vue stéréoscopique par un système de lentille et surface optique lenticulaire. Dans cette caméra, on évite le mouvement habituellement nécessaire entre le film et la surface lenticulaire par un diviseur de faisceau lumineux utilisé comme miroir ainsi qu'un miroir concave. Le problème de l'orthostéréoscopie bien qu'évoqué dans ce document de l'art antérieur n'est pas résolu par cette technique car tous les composants optiques qui sont l'équivalent d'une suite de lentilles convergente et d'un miroir retournent l'image, mais aussi les points de vue, il en résulte une image pseudo stéréoscopique contraire à ce qui est affirmé dans ce document.

En résumé, selon l'art antérieur, pour obtenir une image stéréoscopique, on utilise un objectif suivi d'une surface lenticulaire.

Toutefois, si l'on observe cette image à travers une surface lenticulaire (restitution de l'image en relief), on constate que la stéréoscopie est faussée car les points de vue sont inversés, les objets éloignés en réalité semblant se rapprocher bien que leur taille et les parties cachées restent conformes à la réalité.

Selon l'art antérieur, pour éviter des défauts de pseudo stéréoscopie, il est connu d'utiliser un mouvement relatif de l'objectif par rapport au réseau lenticulaire pour assurer la compensation. Un autre système consiste à prendre d'abord la photographie pseudo stéréoscopique derrière l'ensemble formé par l'objectif et la surface lenticulaire puis de reprendre une nouvelle photographie par un procédé identique de cette photo munie de son réseau lenticulaire.

On obtient ainsi par cette double opération une photographie orthostéréoscopique. Toutefois, ce système est compliqué et ne convient pas pour les applications en vidéo.

Ainsi, les techniques connues de prise de vue stéréoscopique ne permettent pas, à l'aide de moyens simples, de réaliser des vues orthostéréoscopiques ; de plus, les moyens connus de prise de vue orthostéréoscopiques ne peuvent s'utiliser en technique vidéo, car photographier une image donnerait dans tous les cas une image de qualité très mauvaise sans aucune définition, très sombre et en temps différé.

Il existe également un procédé et une installation pour former une image orthoscopique, selon l'invention divulguée par le demande de brevet EP-A-0084998. Toutefois, cette technique antérieure utilise des moyens optiques pour analyser et retourner les images élémentaires par rapport à leur axe ou leur centre de symétrie.

Un tel procédé, envisageable sur le plan théorique, également mis en oeuvre sur le plan pratique pour le Professeur BONNET, nécessite des moyens très importants. En effet, la construction d'un tel système optique est une opération extrêmement compliquée et délicate. Il faut tailler des optiques spéciales sur un tour avec une vis mère conçue de manière particulière pour chaque optique. Il est également impossible de réduire l'encombrement total de ce système uniquement optique pour l'appliquer à la technique vidéo. Ainsi, une telle solution mécanique/optique ne peut-elle s'envisager pour une industrialisation, surtout à grande échelle par exemple dans le domaine des techniques vidéo, pour des images en relief.

La présente invention a pour but de remédier à ces inconvénients et se propose de créer un procédé permettant, à l'aide d'un objectif unique associé à une surface lenticulaire (ou un ensemble d'objectifs corrélés pour accroître l'embase stéréoscopique associés à autant de surfaces lenticulaires) et ne nécessitant pas de mouvement relatif à l'intérieur du système optique, d'obtenir des images orthostéréosco piques, permettant une très large diffusion de la prise de vue stéréoscopique applicable également aux techniques vidéo et aux images en papier ou supports transparents obtenus à partir de la vidéo, c'est-à-dire les images reconstituées point par point à partir de signaux vidéo.

A cet effet, l'invention concerne un procédé du type ci-dessus, caractérisé en ce que :

– on sépare l'image en ses images élémentaires en nombre égal à celui des lenticules,

– on retourne sur elles-mêmes, par un procédé électronique, les images élémentaires par rapport à leur axe de symétrie (centre de symétrie) dans le cas de lentilles cylindriques (lentilles sphériques)

– on recombine les images élémentaires qui restent ordonnées de la même façon qu'avant le retournement.

Ainsi, grâce au retournement des images élémentaires sur elles-mêmes, l'oeil droit et l'oeil gauche verront le bon point de vue (point de vue de droite, point de vue de gauche).

Ce procédé se réalise par une analyse électronique de l'image formée par le système optique, d'un découpage de cette image en images élémentaires et un traitement, soit analogique, soit numérique des images élémentaires pour les retourner et obtenir l'image orthostéréoscopique.

Le procédé ci-dessus présente l'avantage de la simplicité et de pouvoir s'appliquer aux techniques vidéo ainsi qu'aux images de synthèse obtenues par une simulation du procédé.

L'invention concerne également une installation pour la mise en oeuvre de ce procédé, caractérisée en ce qu'elle se compose d'un système optique formé d'une lentille unique et d'une surface optique lenticulaire ainsi qu'une surface d'image avec un analyseur opto-électronique d'image décomposant l'image en ses images élémentaires et un inverseur électronique ou informatisé pour retourner sur elles-mêmes les images élémentaires en conservant l'ordre ainsi qu'un moyen de visualisation.

Cette installation est elle-même relativement simple et, surtout, applicable aux techniques vidéo. Suivant une variante de réalisation, la surface lenticulaire peut être intégrée à la caméra vidéo, devant sa surface sensible. On peut également former l'image par un système optique sur une surface dépolie, la caméra prenant l'image sur cette surface dépolie. Lors de la prise de vue avec la caméra, un choix sera fait entre la résolution et le nombre de points de vue pour la multistéréoscopie. En effet, le capteur photosensible de la caméra étant composé du même nombre d'éléments, il est possible, soit d'avoir un petit nombre de points de vue et une résolution élevée de l'image, soit un grand nombre de points de vue (multistéréoscopie) et une résolution moindre. Dans le cas d'un tube de prise de vue, le numérisateur et l'afficheur (écran) limitent la résolution.

Enfin, comme déjà précisé ci-dessus, la technique ainsi développée s'applique également aux images de synthèse.

La présente invention sera décrite de manière plus détaillée à l'aide des dessins annexés dans lesquels :

– la figure 1 est un schéma explicatif d'un système optique de prise de vue montrant l'effet de pseudo stéréoscopie,

– la figure 2 est un schéma optique de l'invention,

– la figure 3 est un schéma du procédé général selon l'invention,

– la figure 4 est un schéma d'une installation vidéo mettant en oeuvre l'invention.

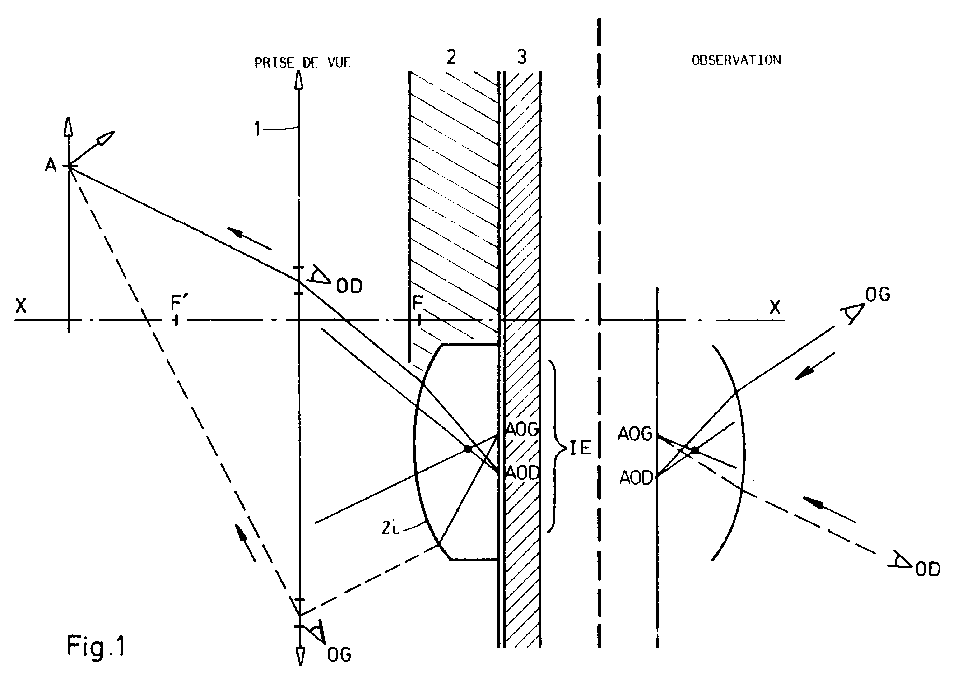

La figure 1 est une vue en plan d'un système optique pour la prise de vue d'images stéréoscopiques.

Ce système optique se compose d'une lentille 1 de grandes dimensions derrière laquelle se trouve une surface lenticulaire 2, c'est-à-dire une surface formée d'un ensemble de lentilles délimité par des surfaces cylindriques toutes perpendiculaires au plan de la figure et dont une seule (2i) a été représentée.

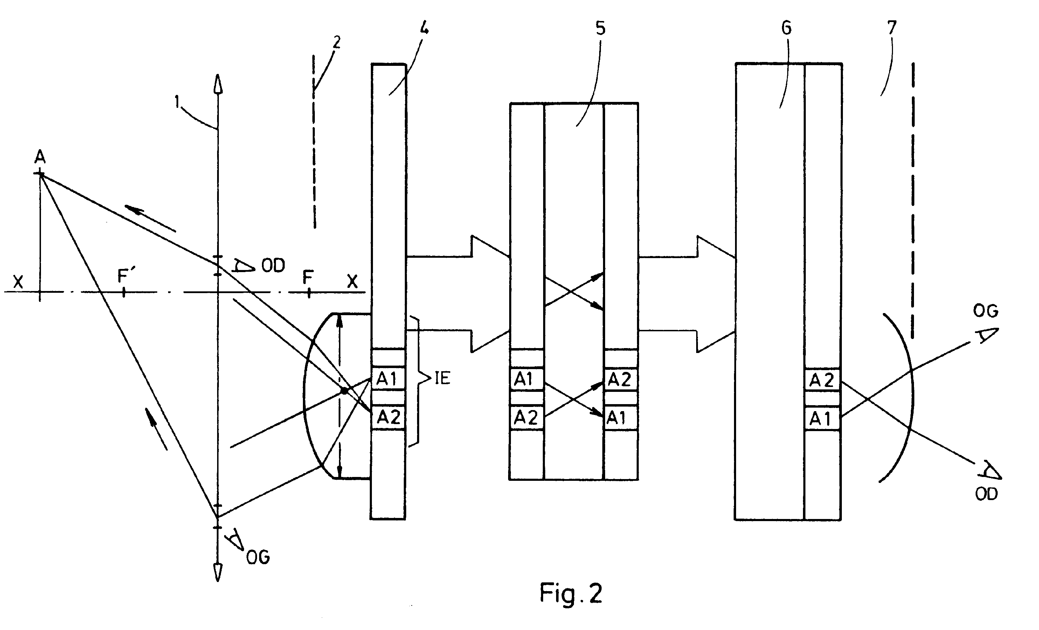

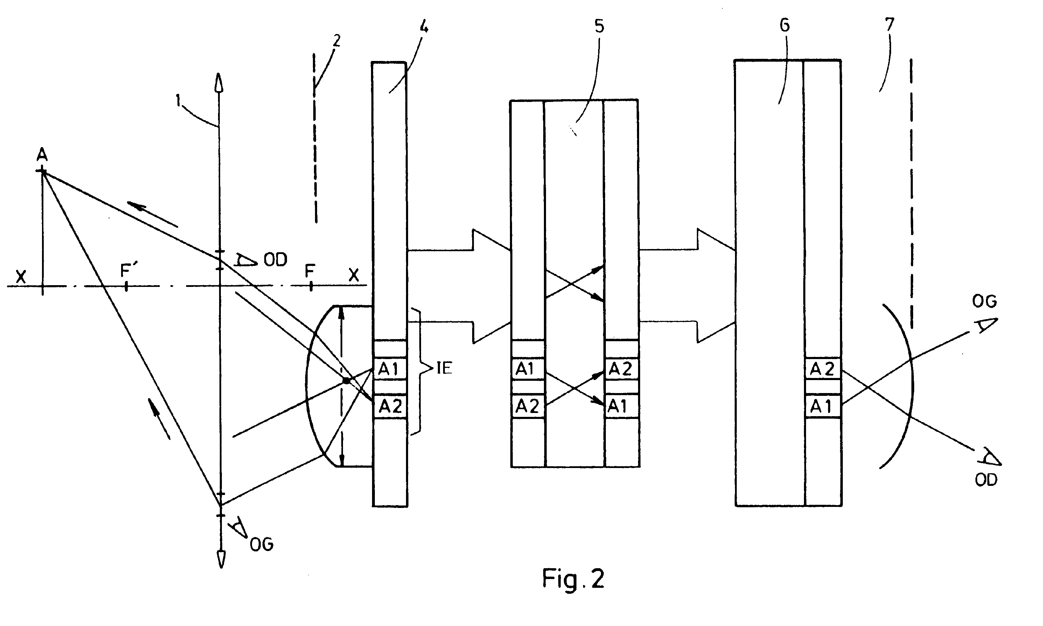

Pour comprendre la prise de vue stéréoscopique et le problème de l'orthostéréoscopie, la figure 2 a été subdivisée en une partie gauche correspondant à la prise de vue et une partie droite correspondant à l'observation de l'image.

Pour la prise de vue on a figuré un point objet A situé devant la lentille 1 ; au niveau de la lentille, on a schématisé l'oeil droit OD et l'oeil gauche OG regardant le point A et définissant ainsi un certain point de vue. En effet, le système de vue stéréoscopique à grande lentille 1 et système lenticulaire 2, "voit" le point objet A comme si les deux yeux OD et OG étaient placés au niveau de la lentille 1. En fait, une petite partie de la lentille 1 située à l'emplacement des yeux OD et OG reçoit respectivement les faisceaux lumineux émis par le point objet A et destinés respectivement à l'oeil droit et à l'oeil gauche (en vue de dessus comme à la figure 1).

En traçant les rayons lumineux ainsi destinés à l'oeil droit et à l'oeil gauche et traversant le système optique formé par la lentille 1 et le réseau lenticulaire 2 on obtient le point image AOD qui est le point image destiné à l'oeil droit et le point AOG qui est le point image destiné à l'oeil gauche.

Le rayon lumineux correspondant à l'oeil droit est représenté par un trait plein alors que le rayon lumineux destiné à l'oeil gauche est représenté par un trait interrompu.

Les points image AOG et AOD impressionnent par exemple une surface photosensible 3 placée derrière le réseau lenticulaire 2 ou encore apparaissent sur un verre dépoli.

Dans le cas le plus simple, d'un observateur unique restant en place (ce qui correspond à un point de vue stéréoscopique), l'oeil droit et l'oeil gauche occupent une position précise qui reste fixe.

Pour la prise de vue, cela correspondrait à placer derrière l'objectif 1 deux diaphragmes à des positions fixes. Dans ce cas, il résulterait de chaque point objet A deux points images AOG et AOD.

A la restitution, cela ne donnerait qu'un point d'observation pour l'image stéréoscopique. Or, en réalité, on cherche à obtenir de multiples points d'observation stéréoscopiques de l'image (distance et direction de vue variables par rapport à l'image).

Pour cela, à la prise de vue, il ne faut pas limiter l'utilisation de l'objectif à un point de vue stéréoscopique matérialisé par deux diaphragmes situés à l'emplacement de "l'oeil gauche" et de "l'oeil droit", mais prévoir un diaphragme plus grand donnant une continuité de points images par "l'oeil droit" et par "l'oeil gauche" derrière chaque lentille du réseau lenticulaire. Ce diaphragme correspond à une fente horizontale. L'ensemble des points images formés par l'objectif et une seule lentille du réseau est appelé "image élémentaire IE".

Dans le cas d'un réseau de lentilles cylindriques d'axe vertical, chaque partie de la lentille forme du point objet A un point image. On obtient ainsi un ensemble de points images dont font partie les points AOG et AOD. Cette remarque ne s'applique que dans la direction horizontale et non dans la direction verticale puisque le réseau est à lentilles cylindriques verticales.

Dans le cas d'un réseau de lentilles sphériques réparties suivant la direction horizontale et la direction verticale, le diaphragme est inutile.

Il faut remarquer que l'image globale formée par l'objectif 1 est renversée, disposition qui n'est pas modifiée globalement par le réseau lenticulaire qui ne transforme l'image qu'au niveau élémentaire.

Dans ces conditions, pour observer l'image, il faut se placer derrière celle-ci et en position renversée, c'est-à-dire que l'oeil gauche et l'oeil droit occuperont la position représentée à la figure 1, c'est-à-dire une position inversée de celle de la prise de vue.

A l'observation de cette image globale avec interposition d'un réseau, l'oeil gauche verra le point image AOD destiné à l'oeil droit et l'oeil droit verra le point image AOG destiné à l'oeil gauche. Il en résulte un effet de pseudo-stéréoscopie.

La figure 2 montre le procédé et l'installation selon l'invention, permettant de restituer une image donnant une vision orthostéréoscopique, c'est-à-dire une vision à trois dimensions dans laquelle l'oeil droit et l'oeil gauche voient effectivement les parties de l'image qui leur sont destinées.

Selon l'invention, on décompose l'image en images élémentaires (IE) dont les points images AOG, AOD sont reçus respectivement par des zones A1, A2... d'un capteur optoélectronique de type CCD qui analyse l'image ou encore d'un tube corrigé des aberrations géométriques ; les signaux analogiques ainsi captés et correspondant aux points images sont numérisés pour être traités par un circuit électronique 5 qui retourne les images élémentaires tout en conservant leur ordre dans l'image globale.

L'inversion décrite peut également se faire de manière analogique.

Quelque soit le type de traitement, ce retournement se fait de manière électronique. Il est représenté schématiquement à la figure 2 dans le bloc de la figure 5. Les signaux ainsi obtenus sont transmis à un dispositif d'affichage 6 qui affiche de nouveau les images élémentaires correspondant à chaque lentille du réseau pour permettre leur vision par l'oeil droit OD et l'oeil gauche OG à travers un réseau lenticulaire 7 optiquement identique au réseau lenticulaire 2 ayant servi à la prise de vue. On constate ainsi que l'oeil droit OD voit le point image de la zone A2 et l'oeil gauche OG, le point image de la zone A1 comme si l'oeil droit et l'oeil gauche occupaient la position représentée dans la partie de prise de vue. On a donc la vision d'une image orthostéréoscopique.

On remarque également ici que le système optique renversant l'image globale il est nécessaire de l'observer de manière retournée ce qui explique qu'à la figure 2, comme à la figure 1, la position de l'observateur est renversée par rapport à la position des "yeux" à la prise de vue.

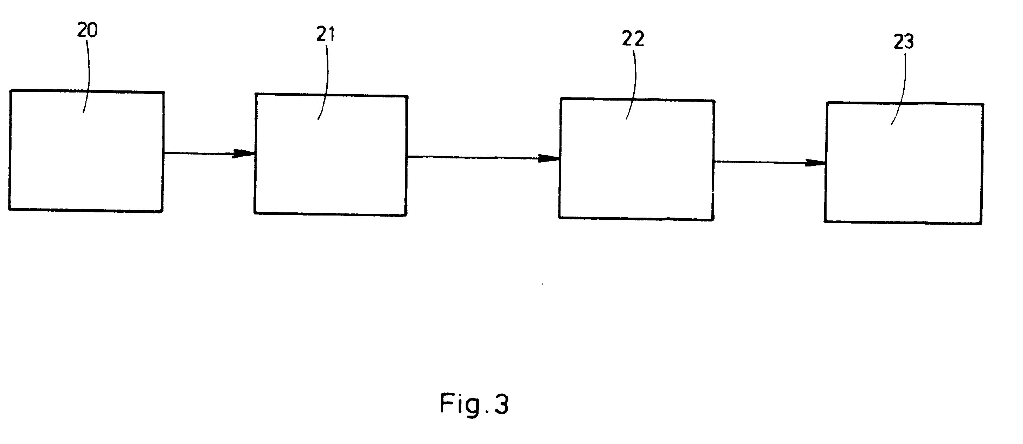

La figure 3 montre schématiquement le procédé selon l'invention.

Ce procédé réalise des images en relief de type autostéréoscopique selon le principe d'une prise de vue ou d'une vision à l'aide d'une surface optique lenticulaire comportant différentes lentilles élémentaires.

La prise de vue se fait avec une seule lentille d'objectif, suivant au moins deux points de vue différents correspondant aux deux yeux d'un observateur ; la série de lentilles élémentaires forme pour chaque direction de vue, une image de l'objet ; cette image est composée d'images élémentaires formées respectivement par l'ensemble optique comprenant la lentille de l'objectif et la surface optique lenticulaire.

Selon l'invention, le procédé consiste à effectuer une telle prise de vue (20), à décomposer (21) l'image en images élémentaires, à retourner sur elle-même (22) chaque image élémentaire et à recombiner (23) les images élémentaires pour former une image globale.

La figure 4 est un schéma d'une installation vidéo de prise de vue d'images autostéréoscopiques.

Cette installation se compose d'une caméra de prise de vue 31 qui traite l'image 30. Cette caméra 31 est suivie d'un circuit de numérisation 32 qui transforme le signal analogique fourni par la caméra 31 en un signal numérique. Ce signal numérique est inscrit dans la mémoire 33 pour être fourni à un calculateur 34 ayant différents périphériques tels qu'un lecteur de disque 35, un écran de contrôle 36, un clavier 37. Le signal traité par le calculateur 34 est transmis à une mémoire 38 et par l'intermédiaire d'un convertisseur numérique/analogique 39, le signal est transformé en un signal analogique transmis à un circuit d'utilisation 40 tel qu'un émetteur, un moyen d'enregistrement, tel qu'un magnétoscope, etc.

Le signal ainsi traité peut, également, être transmis à un récepteur de télévision 41 pour être visualisé sur son écran cathodique 42 suivant les techniques de la télévision en relief, c'est-à-dire avec interposition d'un réseau lenticulaire.

Le système décrit ci-dessus est avantageusement remplacé par des circuits électroniques qui traitent l'information en temps réel donc plus rapidement et sont beaucoup plus simples et par suite beaucoup moins coûteux. Le système électronique se compose de préférence d'une caméra 31, d'un numérisateur 32, d'une carte de retournement, d'un convertisseur numérique/analogique, éventuellement d'un système de transmission ou de stockage d'images et d'un moyen de réception et d'affichage, comportant toujours un réseau lenticulaire.

Bien que la description ci-dessus utilise un traitement numérique il est également possible d'effectuer un traitement similaire sur le signal analogique sans passer par l'étape de numérisation.

La description de l'invention faite ci-dessus dans son principe, utilise une seule lentille 1 de prise de vue (figure 1). Cette lentille peut également être remplacée par un moyen équivalent pour modifier (augmenter) l'embase stéréoscopique. Pour cela il faut remplacer l'ensemble unique de prise de vue par plusieurs ensembles identiques corrélés, c'est-à-dire dont les diaphragmes en forme de fente horizontale n'ont à chaque fois qu'une largeur correspondant à une fraction de l'ouverture totale, de façon que la superposition des images d'une même scène, formées derrière les réseaux lenticulaires donne une image unique correspondant à celle que l'on aurait obtenue avec le système unique, à la différence de l'embase stéréoscopique près.

De plus, le nombre de systèmes utilisés simultanément ne doit pas dépasser le nombre de points de vue choisis.

Il est à remarquer que, pour des raisons de traitement (retournement des images élémentaires), le nombre de points de vue est prédéterminé de sorte qu'à chaque point de vue est associé un point image par lentille du réseau. Le point image est nécessairement aussi grand que le pixel de la partie du système qui a la plus faible résolution (caméra ou numérisateur ou écran). On n'a aucun intérêt à ce que le point image soit égal à deux pixels "eldim" (selon la terminologie française) ; dans ce cas, il conviendrait de doubler le nombre de lentilles du réseau pour couvrir une image plus grande ou une image égale avec une résolution meilleure dans un rapport double.

En conclusion, l'invention permet la création d'images orthostéréoscopiques, soit sur des supports photographiques, soit des supports vidéo (bandes magnétiques, disques numériques ou numériques/analogiques). Il convient de remarquer que l'invention s'applique également à la réalisation d'images orthostéréoscopiques de synthèse.

**Revendications**

1. Procédé de réalisation d'images en relief, images de type autostéréoscopiques, selon le principe d'une prise de vue ou d'une vision à l'aide d'une lentille principale et d'une surface optique lenticulaire comportant une série de lentilles élémentaires, la prise de vue du sujet non réduit à un point étant faite suivant au moins deux points de vue différents correspondant aux deux yeux d'un observateur, la série de lentilles élémentaires donnant pour chaque point de vue une image composée de points-images formés respectivement par la lentille principale et chaque lentille élémentaire, l'image étant restituée à travers un système lenticulaire optiquement identique à celui de la prise de vue, procédé caractérisé en ce que :
   – on sépare (20, 21) l'image en ses images élémentaires en nombre égal à celui des lenticules,
   – on retourne (22) sur elles-mêmes, par un procédé électronique, les images élémentaires par rapport à leur axe de symétrie (centre de symétrie) dans le cas de lentilles cylindriques (lentilles sphériques).
   – on recombine (23) les images élémentaires qui restent ordonnées de la même façon qu'avant le retournement.

2. Installation pour la mise en oeuvre du procédé selon la revendication 1, caractérisée en ce qu'elle se compose d'un système optique formé d'une lentille unique (1) et d'une surface optique lenticulaire (2) ainsi qu'une surface d'image avec un analyseur opto-électronique d'image (4) décomposant l'image en ses images élémentaires et un inverseur électronique ou informatisé (5) pour retourner sur elles-mêmes les images élémentaires en conservant leur ordre ainsi qu'un moyen de visualisation (6).

**Claims**

1. Method for generating stereoscopic images, images of the autostereoscopic type, according to the principle of taking an image or a view using a principal lens and a lenticular optical surface comprising a series of elementary lenses, the image of the subject, not reduced to a point, being taken from at least two different viewpoints corresponding to the two eyes of an observer, the series of elementary lenses giving, for each view-point, an image composed of image points formed, respectively, by the principal lens and each elementary lens, the image being restored via a lenticular optical system identical to that of the taking of the image, the method being characterised in that :

– the image is separated (20, 21) into its elementary images, equal in number to the number of the lenses ;

– if cylindrical lenses (spherical lenses) are used, the elementary images are turned over on themselves about their axes of symmetry (centre of symmetry) by means of an electronic process ;

– the elementary images, which are arranged in the same way as before being turned over, are recombined.

2. Arrangement for impelementing the process according to claim 1, characterised in that it is composed of an optical system formed of a single lens (1) and of a lenticular optical surface (2) as well as an image surface with an optoelectronic image analyser (4) breaking down the image into its elementary images and an electronic or computerised inverser (5) to turn the elementary images about themselves and retain their order, as well as a display means (6).

**Patentansprüche**

1. Verfahren zur Herstellung von Raumbildern autostereoskopischer Art nach dem Prinzip des Aufnehmens oder Betrachtens mit Hilfe einer Hauptlinse und einer linsenförmigen Optikfläche mit einer Reihe Elementarlinsen, wobei die Aufnahme des nicht auf einen Punkt reduzierten Objekts aus mindestens zwei verschiedenen, den beiden Augen eines Betrachters entsprechenden Blickpunkten erfolgt und die Reihe von Elementarlinsen für jeden Blickpunkt ein Bild ergibt, das sich zusammensetzt aus Bildpunkten, die jeweils von der Hauptlinse und jeder Elementarlinse gebildet werden, und wobei das Bild über ein optisch gleiches Linsensystem wie das für die Aufnahme wiedergegeben wird, dadurch gekennzeichnet, daß

– daß Bild in seine Elementarbilder in gleicher Zahl wie die Linsen aufgeteilt (20, 21) wird;

– die Elementarbilder in bezug auf ihre Symmetrieachse (Symmetriemitte) bei zylindrischen Linsen (balligen Linsen) durch ein elektronisches Verfahren auf sich selbst zurückgeführt (22) werden;

– die Elementarbilder, die in gleicher Weise wie vor der Rückführung geordnet bleiben, wieder zusammengesetzt (23) werden.

2. Anlage für den Einsatz des Verfahrens nach Anspruch 1, dadurch gekennzeichnet, daß sie umfaßt eine Optik, die gebildet wird durch eine Einzellinse (1) und eine linsenförmige Optikfläche (2), sowie eine Bildfläche (4) zum Zerlegen der Elementarbilder und einen elektronischen oder informatisierten Umschalter (5) zum Zurückführen der Elementarbilder auf sich selbst unter Beibehaltung ihrer Ordnung, wie auch ein Betrachtungsmittel (6).

Fig.1

Fig. 2

Fig. 2

Fig.3

EP 0 305 274 B1